# EUROPEAN PATENT SPECIFICATION

(11) **EP 0 852 103 B1**
(45) Date of publication and mention of the grant of the patent: **28.04.2004**
(21) Application number: 96925223.8
(22) Date of filing: 12.07.1996
(51) Int. Cl.: H04Q 7/38, H04M 1/66

(54) **DEVICE, USE AND PROCEDURE TO IDENTIFY COMMUNICATING PARTIES IN A TELECOMMUNICATION SYSTEM**
EINRICHTUNG UND VERFAHREN ZUR IDENTIFIZIERUNG VON GESPRÄCHSPARTNERN IN EINEM TELEKOMMUNIKATIONSSYSTEM SOWIE DEREN ANWENDUNG
DISPOSITIF ET PROCEDE POUR IDENTIFIER LES INTERLOCUTEURS DANS UN SYSTEME DE TELECOMMUNICATION

(30) Priority: 18.08.1995 SE 9502881
(43) Date of publication of application: 08.07.1998
(73) Proprietor: TELIA AB, 123 86 Farsta (SE)
(72) Inventor: OHLSSON, Hans, S-135 55 Tyresö (SE); FRIDH, Kurt, S-138 34 Älta (SE)
(74) Representative: Akerman, Marten Lennart
(86) International application number: PCT/SE1996/000948
(87) International publication number: WO 1997/007645

(56) References cited:
- WO-A-94/11849
- GB-A- 2 211 695
- VEDDER K.: 'Security Aspects of Mobile Communication' COMPUTER SECURITY AND INDUSTRIAL CRYPTOGRAPHY 21 May 1991 - 23 May 1991, LEUVEN, BE, pages 193 - 210

## Description

### TECHNICAL FIELD

The present invention relates to a device and procedure to identify communicating parties in a telecommunication system at which active cards cooperates with the telecommunication equipment at one or both parties at the communication.

### PRIOR ART

Normally an information transmission via the telecommunication network can come about in that way that a communication transmitter A which intends to communicate with a card supplier or service supplier B connects an active card to his/her telecommunication equipment. The active card is also called smart card, or intelligent card, and usually contains an integrated circuit with memory and processor. After that this person keys his/her secret personal identity number (PIN-code) to the communication equipment which includes reader for active cards, at which communication is performeed between the card and the owner. The card then checks that it is used by the person who is authorized to use the card.

Then the communication transmitter A keys the telephone number to the card supplier B with whom he/she intends to exchange information. The card supplier B then wants to make sure that it is an authorized communication transmitter that wants admission. This is made by that a digitally secured, encrypted string of information which is stored in the active card is transmitted to the card supplier, which has the encryption key to this information. By that the card supplier can decide whether the communication transmitter is authorized. This procedure means that we now has secure connection between a communication transmitter and a card supplier. After that, encrypted information according to some encryption method can be transmitted between these parties.

The article "Security Aspects of Mobile Communications", XP 000534142, Computer Security and industrial cryptography, 21 - 23 May 1991, Leuven, BE, discloses a device at a telecommunication system arranged to identify communicating parties. GSM telephones transmit information to each other and an active card is applied to each GSM telephone in order to identify both parties in the telecommunication network.

The international patent application WO 94/11849 A1 discloses a device and a method at a telecommunication system to identify communicating parties, comprising a telecommunication network for transmission of information between a first and a second telecommunication equipment, a first card reader connectable to said first telecommunication equipment and a first active card arranged to be applied to said first card reader. The card reader is arranged to ask a first person to key his/her personal PIN-code and the first card is arranged to automatically transmit a digitally secured string of information to a node in said telecommunication network if said first person is authorized to use said first card, and the node is arranged to identify said first card, whereby the node has information about said first person.

However, none of the known prior art documents discloses that the steps for authorization of a second person is made after the second person gets a voice message or a message to one to the second telecommunication equipment connected display that an identification call is coming.

### DESCRIPTION OF THE INVENTION

### TECHNICAL PROBLEM

Transmission of delicate information via the telephone network requires that the information is protected against unauthorized influence, recording and distorsion by persons who illegally get access to the network.

Furthermore is required that those who communicate via the network can be sure to decide that the person with whom they intend to communicate really is the person he/she states himself/herself to be.

At communication between two communicating parties active cards are often utilized.

The active cards usually include the following functions:
- Verification of owner.
- Identification: Identity check.
- Support for encryption such as ability to perform active operations in connection with signing of information.

The function for identification implies that the card supplier, which often is a service supplier, checks the identity by using a secret key which he/she knows. This means that customers to a card supplier normally cannot use the same card to communicate with another card supplier (service supplier). However, the other service supplier can obtain the secret key by some type of agreement, and in the same way as above, the identity in these cases can be checked.

The aim with the invention consequently is to effect one in relation to prior art improved and simplified communication system which allows a simple and secure identification of communicating parties before one for instance transmits encrypted information.

Another aim with the invention is to give support for different encryption procedures.

### THE SOLUTION

The above mentioned aims are achieved by the invention showing the in the enclosed patent claims indicated characteristics.

### ADVANTAGES

By the invention a number of advantages are achieved. In the first place a simpler and neater way to identify telecommunicating parties is obtained.

Further the invention leads to that card manufacturers and service suppliers can utilize a general identification platform which is located between transmitter and receiver.

One more advantage is that the manufacturing of active cards can be simplified because it is possible to exclude functionality in the card for check of identification. This also makes them cheaper to manufacture.

Further the identification is not based on subscriber number, which implies that it is possible to be identified from different telecommunication equipments.

Further the invention implies that all types of telecommunication equipments obtain, by the invention, possibility to identify its opposite party.

Another advantage is that service suppliers get possibility to create active cards which can be used towards different types of service suppliers.

### DESCRIPTION OF DRAWINGS

The invention will now be described by means of not restricted examples of embodiment and with references to enclosed, schematically performed drawings. In the drawings;
Figure 1 shows a communications system according to the invention with identification of one party.
Figure 2 shows a communications system according to the invention with identification of both parties.

### DETAILED DESCRIPTION

The present way of identifying transmitters and receivers implies that the function check and the information which is necessary for this control only exist on the transmitter side and the receiver side.

This results in that each communication receiver has devices for check of authorization of the active card of the communication transmitter before the encrypted information can be transmitted.

In order to make the invention clear, some examples of how the invention is realized is now shown.

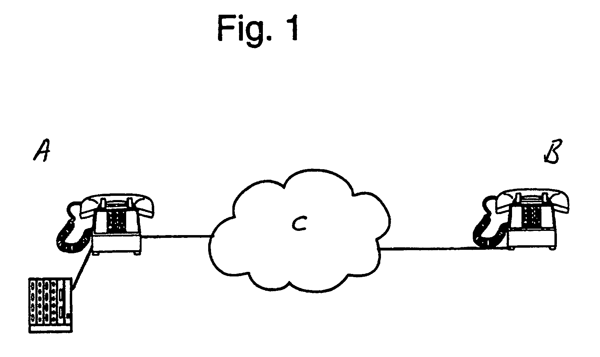

### Example 1. (with reference to Figure 1)

The receiver subscribes to identification service.

A person A intends to communicate with a person B via the public telecommunication network. The person B, who can be a service supplier, wants to be perfectly sure that the person A is the person he/she states him/herself to be.

The person A has to his assistance a telephone, fax, personal computer or the like, and a reader for active cards. The reader for active cards can be integrated with the communication equipment, or be a stand alone unit. The card is applied to the reader at which the card owner is asked by the reader to key his personal identification number (PIN-code). The keying of the PIN-code aims at deciding whether person A has authorization to use the card. After that a telephone number which the telecommunication operator has provided to the person B is keyed to make possible for the person B to utilize a special identification service. If the card owner has authorization to use the card, the card automatically transmits a digitally secured string of information to a node in the network, which has a device with functionality to identify the card. The node has the information to decide from which person this string of information is coming. When the identity has been checked, information about this is transmitted to the person B, at which the call is connected.

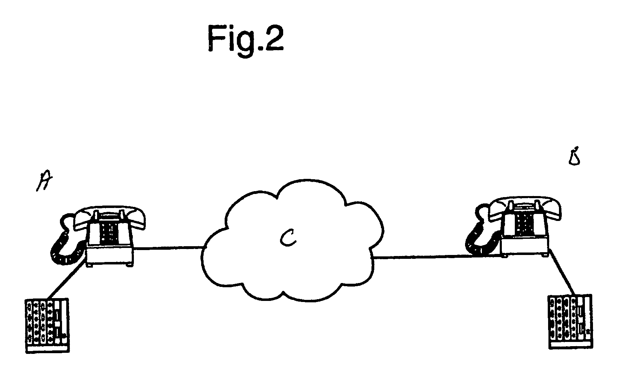

### Example 2 (with reference to Figure 2)

Both the transmitter and the receiver subscribe to identification service.

A person A intends to communicate with a person B via the public telecommunication network. The person B, who can be a service supplier, wants to be perfectly sure that the person A is the one he/she states him/herself to be, and the person A wants to be sure that he/she has contact with the right receiver.

A person A calls a person B in the same way as above and identifies himself/herself to the card. If the card owner has authorization to use the card, the card automatically transmits a digitally secured string of information to a node in the network C, which has a device with functionality to identify the card. After that the call is forwarded to person B, who gets a voice message or a message on one to the telephone connected display that an identification call is coming. Person B then applies his/her active card to his/her reader with indication of PIN-code, at which the card automatically transmits a digitally secured string of information to the node, which verifies that the card owner is authorized. A connection is then made by the network, at which person A and person B has a connection with checked identities of respective party.

By this check the possibility for these persons is now created to transmit information to each other where the network has checked the identity of both. The persons A and B now can transmit delicate information to each other.

In the cases when these persons want to transmit encrypted information via the network, there is possibility to utilize a special encryption function.

In principle it is possible to encrypt one's information in two different ways: Symmetric respective asymmetric.

The classic symmetric method is based on that transmitter and receiver use the same encryption key to encrypt respective decrypt a message which of course must be kept secret. The disadvantage of this method is the handling of all keys.

Among other things for this reason there have arisen so called asymmetric encryption methods. Here are instead utilized two different keys, of which the "private" key is only known to the owner, and the other, the "public" key has been made public. In this way anyone can encrypt a message with the public key, whereas only the real receiver, the owner of the private key, can decrypt and read the message.
The assymetric encryption is based on that the two different keys have a unique relation (by a mathematical function). But in contrast to the symmetric case, it must be difficult to calculate. The known key shall certainly not be possible to use to calculate what the private key looks like. Due to the large and extensive calculations the method requires, even if one knows the key, it will take a long time to decrypt long messages.

One way to get around the problem of calculation is to combine the two methods by transmitting a short, asymmetrically encrypted message which includes the key of a symmetric encryption. The long message is then encrypted by a symmetric algorithm and can be unlocked by means of the enclosed key. If one then changes key, by for instance making the active card generate new keys at each transaction, one further increases the security.

Decryption with the public key can be used to create electronic seals or signatures. Such a seal contains a check sum calculated on the basis of the contents in a message. This will on the one hand show that the key owner is the originator of the message, and on the other the check sum (if it is correct) confirms that nothing has been changed in the message since it left the originator.

By the in the network located identification device, information about the public keys which corresponds to each card is stored, which contain support functionality for encryption. These keys are specific for each card and public for persons who intend to transmit encrypted information according to asymmetric encryption.

The invention is not restricted to the shown examples of embodiment, but can be varied in just any way within the frame of the idea of the invention, such as it is defined in the following patent claims.

## Claims

1. Device at telecommunication system to identify communicating parties, comprising a telecommunication network (C) for transmission of information between a first and a second telecommunication equipment, a first card reader connectable to said first telecommunication equipment and a first active card arranged to be applied to said first card reader, which card reader is arranged to ask a first person (A) to key his/her personal PIN-code, which first card is arranged to automatically transmit a digitally secured string of information to a node in said telecommunication network (C) if said first person (A) is authorized to use said first card, and which node is arranged to identify said first card, whereby the node has information about said first person (A), **characterized in that** said node is arranged to forward the call to said second telecommunication equipment arranged to receive a voice message or a message at a one to the second telecommunication equipment connected display that an identification call is coming, **in that** a second card is applied to a second card reader connectable to said second telecommunication equipment, by means of which card reader said second person (B) indicates his/her PIN-code, **in that** said second card is arranged to automatically transmit a digitally secured string of information to said node, which node is arranged to verify that the second person (B) is authorized, **in that** said telecommunication (C) is arranged to make a connection with checked identities of respective parties between said first person (A) and said second person (B).

2. Device at telecommunication system according to claim 1, **characterized in that** said node includes a storing device for encryption keys which are specific for each card.

3. Procedure to identify communicating parties in a telecommunication system, wherein a first active card is applied to a first card reader, at which a first person (A) is asked by the first card reader to key his/her personal PIN-code at which, and if said first person (A) is authorized to use said first card, said first card automatically transmits a digitally secured string of information to a node in a telecommunication network (C) which node identifies said first card, at which said node has information to decide from which person this string of information is coming, **characterized in that** the call is forwarded to a second person (B) who gets a voice message or a message on one to a second telecommunication equipment connected display that an identification call is coming, at which said second person (B) applies a second active card to a second card reader at indicating his/her PIN-code, at which said second card automatically transmits a digitally secured string of information to said node, which node verifies that said second person (B) is authorized, at which a connection is made by said telecommunication network (C), at which said first person (A) and said second person (B) has a connection with checked identities of respective party.

4. The procedure according to claim 3, further comprising the step of storing encryption keys which are specific for each card.

## Patentansprüche

1. Einrichtung zur Identifizierung von Gesprächspartnern in einem Telekommunikationssystem mit einem Telekommunikationsnetzwerk (C) zum Übertragen von Information zwischen einem ersten und einem zweiten Telekommunikationsgerät, einem ersten Kartenlesegerät, das an das erste Telekommunikationsgerät anschließbar ist und einer ersten Aktivkarte, die so angeordnet ist, dass sie an dem ersten Kartenlesegerät verwendet werden kann, wobei das Kartenlesegerät so angeordnet ist, dass es eine erste Person (A) auffodern kann, ihren/seinen persönlichen PIN-Code einzugeben, wobei die erste Karte so angeordnet ist, dass sie automatisch eine digital gesicherte Reihe von Information an einen Knoten in dem Telekommunikationsnetzwerk (C) überträgt, wenn die erste Person (A) autorisiert ist, die erste Karte zu verwenden, und wobei dieser Knoten so angeordnet ist, dass er die erste Karte identifizieren kann, wodurch der Knoten die Information über die erste Person (A) hat, **dadurch gekennzeichnet, dass** der Knoten so angeordnet ist, dass er den Anruf zu dem zweiten Telekommunikationsgerät leiten kann, das so angeordnet ist, dass es eine Sprechmitteilung oder eine Mitteilung an einer, an das zweite Telekommunikationsgerät angeschlossenen Anzeige, dass ein Identifikationsanruf kommt, empfangen kann, dass eine zweite Karte an einem zweiten Kartenlesegerät verwendet wird, das an das zweite Telekommunikationsgerät anschließbar ist, wobei mittels dieses Kartenlesegerätes die zweite Person (B) ihren/seinen PIN-Code anzeigt, dass die zweite Karte so angeordnet ist, dass sie automatisch eine digital gesicherte Reihe von Information an den Knoten überträgt, wobei dieser Knoten so angeordnet ist, dass er verifiziert, dass die zweite Person (B) autorisiert ist, dass die Telekommunikation (C) so angeordnet ist, dass sie eine Verbindung mit überprüften Identitäten der entsprechenden Gesprächspartner zwischen der ersten Person (A) und der zweiten Person (B) bildet.

2. Einrichtung eines Telekommunikationssystems nach Anspruch 1,
**dadurch gekennzeichnet, dass** der Knoten eine Speichervorrichtung für Chiffrierschlüssel aufweist, die für jede Karte spezifisch sind.

3. Verfahren zum Identifizieren von Gesprächspartnern in einem Telekommunikationssystem, wobei eine erste Aktivkarte in einem ersten Kartenlesegerät verwendet wird, an welchem eine erste Person (A) durch das erste Kartenlesegerät nach ihrem/seinen persönlichen PIN-Code gefragt wird, mit welchem und wenn die erste Person (A) für die Verwendung der ersten Karte autorisiert ist, die erste Karte automatisch eine digital gesicherte Reihe von Information zu einem Knoten in einem Telekommunikationsnetzwerk (C) überträgt, wobei der Knoten die erste Karte identifiziert bei der der Knoten die Information hat, zu entscheiden, von welcher Person diese Informationsreihe kommt,
**dadurch gekennzeichnet, dass** der Anruf zu einer zweiten Person (B) geleitet wird, die eine Sprechmitteilung oder eine Mitteilung auf ein mit dem zweiten Telekommunikationsgerät verbundenen Anzeigevorrichtung erhält, dass ein Identifikationsanruf kommt, an welchem die zweite Person (B) eine zweite Aktivkarte in ein zweites Kartenlesegerät beim Angeben seines/ihres PIN-Codes eingibt, wobei die zweite Karte automatisch eine digital gesicherte Informationsreihe an den Knoten überträgt, dieser Knoten verifiziert, dass die zweite Person (B) autorisiert ist, wobei durch das Telekommunikationsnetzwerk (C) eine Verbindung hergestellt wird, bei der die erste Person (A) und die zweite Person (B) eine Verbindung haben, bei der die Identitäten der entsprechenden Gesprächspartner überprüft sind.

4. Vorgang nach Anspruch 3, weiterhin mit dem Schritt Speichern von Chiffrierschlüsseln, die für jede Karte spezifisch sind.

## Revendications

1. Dispositif dans un système de télécommunication pour identifier des interlocuteurs, comprenant un réseau de télécommunication (C) pour transmission d'informations entre un premier et un deuxième équipements de télécommunication, un premier lecteur de carte qui peut être connecté au dit premier équipement de télécommunication et une première carte active prévue pour être appliquée au dit premier lecteur de carte, ce lecteur de carte étant prévu pour demander à une première personne (A) de taper son code PIN personnel, la dite première carte étant prévue pour transmettre automatiquement une chaîne d'informations numériquement sécurisée à un noeud du dit réseau de télécommunication (C) si la dite première personne (A) est autorisée à utiliser la dite première carte, et ce noeud étant prévu pour identifier la dite première carte, de sorte que le noeud possède des informations concernant la dite première personne (A), **caractérisé en ce que** le dit noeud est prévu pour transmettre l'appel au dit deuxième équipement de télécommunication prévu pour recevoir un message vocal, ou un message sur un affichage connecté au deuxième équipement de télécommunication, indiquant qu'un appel d'identification est entrant, **en ce qu'**une deuxième carte est appliquée à un deuxième lecteur de carte qui peut être connecté au dit deuxième équipement de télécommunication, la dite deuxième personne (B) indiquant au moyen de ce lecteur de carte son code PIN, **en ce que** la dite deuxième carte est prévue pour transmettre automatiquement une chaîne d'informations numériquement sécurisée au dit noeud, ce noeud étant prévu pour vérifier que la deuxième personne (B) est autorisée, et **en ce que** le dit réseau de télécommunication (C) est prévu pour établir une connexion, avec des identités vérifiées des entités respectives, entre la dite première personne (A) et la dite deuxième personne (B).

2. Dispositif dans un système de télécommunication selon la revendication 1, **caractérisé en ce que** le dit noeud comprend un dispositif de stockage pour des clés de cryptage qui sont spécifiques pour chaque carte.

3. Procédé pou identifier des entités en communication dans un système de télécommunication, dans lequel une première carte active est appliquée à un premier lecteur de carte, de sorte que le premier lecteur de carte demande à une première personne (A) de taper son code PIN personnel et, si la dite première personne (A) est autorisée à utiliser la dite première carte, la dite première carte transmet automatiquement une chaîne d'informations numériquement sécurisée à un noeud dans un réseau de télécommunication (C), ce noeud identifiant la dite première carte, de sorte que le dit noeud possède des informations pour décider de quelle personne provient cette chaîne d'informations, **caractérisé en ce que** l'appel est transmis à une deuxième personne (B) qui obtient un message vocal, ou un message sur un affichage connecté à un deuxième équipement de télécommunication, indiquant qu'un appel d'identification est entrant, dans lequel la dite deuxième personne (B) applique une deuxième carte active à un deuxième lecteur de carte et indique son code PIN, dans lequel la dite deuxième carte transmet automatiquement une chaîne d'informations numériquement sécurisée au dit noeud, ce noeud vérifiant que la dite deuxième personne (B) est autorisée, dans lequel une connexion est établie par le dit réseau de télécommunication (C), et dans lequel la dite première personne (A) et la dite deuxième personne (B) ont une connexion avec des identités vérifiées de l'entité respective.

4. Procédé selon la revendication 3, comprenant en outre l'étape de stockage de clés de cryptage qui sont spécifiques pour chaque carte.
